# EUROPEAN PATENT APPLICATION

(11) **EP 2 055 895 A2**
(43) Date of publication of application: **06.05.2009**
(21) Application number: 08167466.5
(22) Date of filing: 23.10.2008
(51) Int. Cl.: F01D 5/08, F01D 5/30

(54) **Turbomachine rotor disk**

(30) Priority: 29.10.2007 US 926788
(71) Applicant: Honeywell International Inc., Morristown, NJ 07962 (US)
(72) Inventor: Ramerth, Doug, Chandler, AZ 85248 (US); Ramachandran, Dhinagaran, KA 560043, Bangalore (IN); Gupta, Anish, 560037, Kaikondanahalli (IN)
(74) Representative: Buckley, Guy Julian

(57) **Abstract**

A turbine engine rotor disk is provided for use with a plurality of blades (148), where each blade has an attachment portion (158) defined by a wall (160) and a surface (162). The rotor disk (146) has a first side (150), a second side (152), and an outer radial section (153) with a rim (154) and an overhang (155). Disk slots (156) extend radially inwardly from the disk rim (154), and each is configured to receive the attachment portion (158) of a corresponding blade such that when the blade (148) is disposed therein, the wall (160) of the blade attachment portion (158) is substantially flush with an adjacent portion of the first side(150) of the disk (146) and each disk slot (156) defines a cooling air passage (166) with the surface (162) of the blade attachment portion (158), where the cooling air passage (166) extends axially from the disk first side (150) to the disk second side (152). A cooling air slot (174) is formed in the disk first side (150) and extends radially outward from the overhang (155) of the disk (146) to the cooling air passage (166).

## Description

### TECHNICAL FIELD

The inventive subject matter generally relates to turbine engine assemblies, and more particularly relates to turbine engine components and methods of manufacturing the components.

### BACKGROUND

Turbine engines are used as a primary power source for various kinds of vehicles. Most turbine engines generally follow the same basic power generation procedure. Air is ingested into a fan section, and passes over stator vanes that direct the air into a compressor section to be compressed. The compressed air is flowed into a combustor, mixed with fuel and burned, and directed, at a relatively high velocity, into a turbine section. The turbine section, which includes one or more turbines each made up of disks and blades extending therefrom, receives the hot gases via stationary blades. The stationary blades turn the gas flow partially sideways to impinge on blades mounted on a rotatable turbine disk. The force of the impinging gas causes the turbine disk to spin at high speeds to produce power.

During operation, the blades of the turbine section are cooled by cooling air diverted from the compressor section. The cooling air flows into a stationary Tangential On Board Injector (TOBI) which then directs the cooling air into holes formed in a coverplate attached to a disk of one of the turbines. The cooling air is contained within the turbine section via labyrinth seals and may flow into a space between the coverplate and the disk. After flowing into the space, the cooling air may flow into a plurality of cooling passages formed between the blades and corresponding slots in the disk. Subsequently, the cooling air enters cooling holes formed in the turbine blades to thereby cool the blades.

Cooling effectiveness of the blades may depend on an amount of cooling air and a pressure level at which the cooling air is supplied. In the past, straight radial pumping vanes have been incorporated between the coverplate and the disk to increase flow rate of airflow and to elevate the pressure of the air. Although the aforementioned configuration increases cooling effectiveness to an extent, it may be improved.

Accordingly, it is desirable to have a system for cooling blades that provides increased cooling, as compared with conventional systems. In addition, it is desirable for the system to be relatively simple to implement into existing turbine engines. Furthermore, other desirable features and characteristics of the inventive subject matter will become apparent from the subsequent detailed description of the inventive subject matter and the appended claims, taken in conjunction with the accompanying drawings and this background of the inventive subject matter.

### BRIEF SUMMARY

Turbine engine components, turbine engine assemblies, and methods of manufacturing turbine engine components are provided.

In an embodiment, by way of example only, a turbine engine component is provided for use with a plurality of blades, where each blade has an attachment portion defined by a wall and a surface. The turbine engine component includes a disk, a plurality of disk slots, and a cooling air slot. The disk has a first side, a second side, and an outer radial section, and the outer radial section includes a rim and an overhang. The plurality of disk slots extend radially inwardly from the rim of the disk, and each disk slot is configured to receive the attachment portion of a corresponding blade of the plurality of blades such that when the blade is disposed therein, the wall of the blade attachment portion is substantially flush with an adjacent portion of the first side of the disk and each cooling air slot defines a cooling air passage with the surface of the blade attachment portion, where the cooling air passage extends axially from the disk first side to the disk second side. The cooling air slot is formed in the disk first side and extends radially outward from the overhang of the disk to the cooling air passage.

In another embodiment, by way of example only, a turbine engine assembly includes a disk, a plurality of blades, a plurality of disk slots, and a cooling air slot. The disk has a first side, a second side, and an outer radial section, and the outer radial section includes a rim and an overhang. Each blade has an attachment portion defined by a wall and a surface. The plurality of disk slots extend radially inwardly from the rim of the disk. Each disk slot is configured to receive the attachment portion of a corresponding blade of the plurality of blades such that when the blade is disposed therein, the wall of the blade attachment portion is substantially flush with an adjacent portion of the first side of the disk and each cooling air slot defines a cooling air passage with the surface of the blade attachment portion, where the cooling air passage extends axially from the disk first side to the disk second side. The cooling air slot is formed in the disk first side extending radially outward from the overhang of the disk to the cooling air passage.

In still another embodiment, by way of example only, a method of manufacturing the turbine engine component includes forming a plurality of disk slots into a disk, each disk slot extending radially inwardly from a rim of the disk, and forming a plurality of cooling air slots into a first side of the disk, each cooling air slot corresponding with a disk slot of the plurality of disk slots and extending and located radially inwardly therefrom.

### BRIEF DESCRIPTION OF THE DRAWINGS

The inventive subject matter will hereinafter be described in conjunction with the following drawing figures, wherein like numerals denote like elements, and

FIG. 1 is a partial cross-sectional side view of a turbofan jet engine, according to an embodiment;

FIG. 2 is a close-up, cross-sectional view of a portion of the turbofan jet engine of FIG. 1 indicated by dotted line 2, according to an embodiment;

FIG. 3 is a perspective view of a portion of a turbine, according to an embodiment;

FIG. 4 is a perspective view of a portion of a turbine, according to another embodiment;

FIG. 5 is a perspective view of a portion of a turbine, according to still another embodiment;

FIG. 6 is a close up view of a portion of the turbine shown in FIG. 5; and

FIG. 7 is a flow diagram of a method of manufacturing the turbine section.

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description.

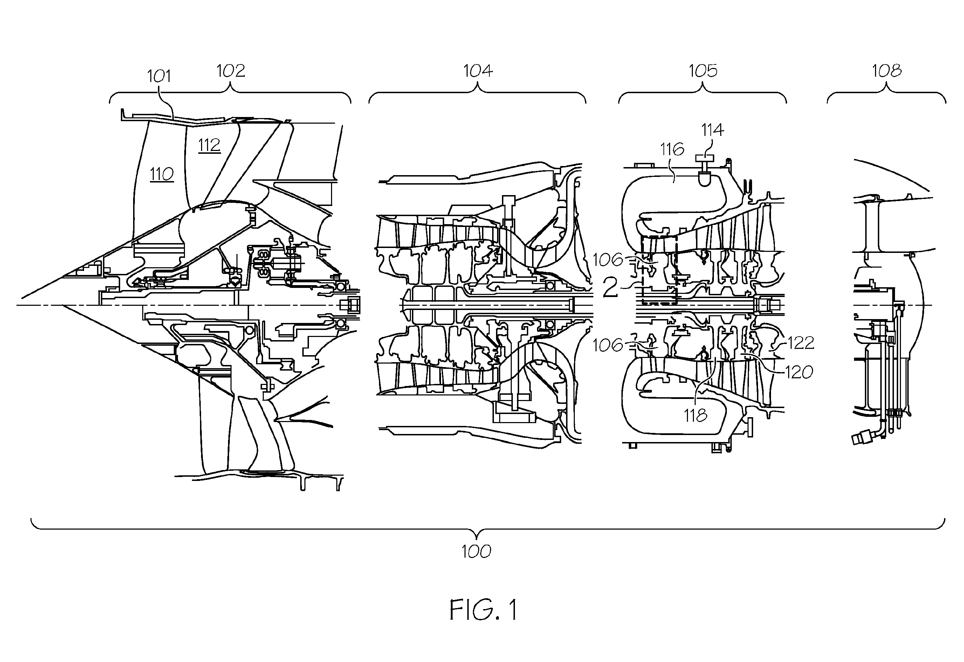

FIG. 1 is a partial cross-sectional side view of a turbofan jet engine 100, according to an embodiment. Turbofan jet engine 100 is disposed in an engine case 101 and includes a fan section 102, a compressor section 104, a combustor and turbine assembly 105, and an exhaust section 108. Fan section 102 is positioned at the front, or "inlet" section of the engine 100, and includes a fan 110 that induces air from the surrounding environment into engine 100. Fan section 102 accelerates a fraction of this air toward compressor section 104, and the remaining fraction is accelerated into and through a bypass 112, and out exhaust section 108. Compressor section 104 raises the pressure of the air it receives to a relatively high level.

The high-pressure compressed air enters combustor and turbine assembly 105, where a ring of fuel nozzles (not shown) injects fuel into a combustor 116. Combustion is initiated by ignitor 114 which ignites the fuel in the high-pressure air to significantly increase the thermal energy thereof. This high-temperature, high-pressure air then flows first into a cooled high pressure turbine stage 106 and then flows into three un-cooled low pressure turbine assemblies 118, 120, 122, causing the turbines to rotate as air flows over radially mounted turbine blades, thereby converting thermal energy from the air into mechanical energy.

The mechanical energy generated in low pressure turbine assemblies 118, 120, 122 is used to power other portions of engine 100, such as fan section 102 and axial stages of the compressor section 104. Air exiting the last turbine assembly 122 then leaves engine 100 via exhaust section 108. Energy remaining in the exhaust air augments thrust generated by the air flowing through bypass 112.

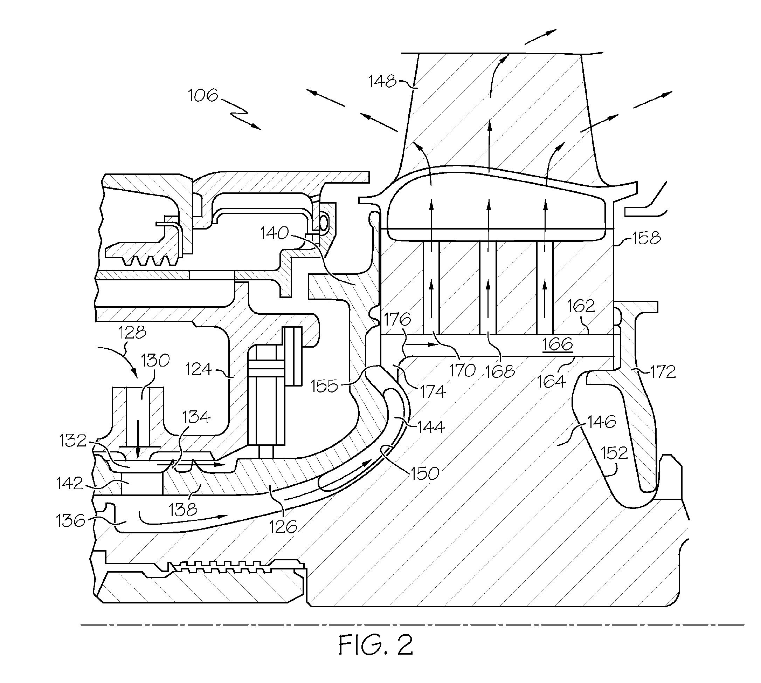

To allow turbine stage 106 to operate as intended when exposed to the high-temperature, high-pressure air from combustor and turbine assembly 105, certain components of turbine stage 106 may be cooled. FIG. 2 is a cross-sectional view of a portion of the turbofan jet engine 100 of FIG. 1 indicated by dotted line 2, according to an embodiment. Turbine stage 106 may include an assembly having a tangential onboard injector ("TOBI") 124 disposed adjacent to a turbine disk 146 and a seal plate 126 positioned therebetween. Each of these components will now be discussed in detail.

TOBI 124 is configured to receive relatively cool air ("cooling air") 128 that may be bled from a cool air source, such as compressor section 104. In this regard, TOBI 124 has one or more holes or passages with vanes 130 that communicate with the cool air source. Although a single hole 130 is shown in FIG. 2, more may alternatively be employed. TOBI 124 may form a first cavity 132 with seal plate 126, and other turbine section components, into which a portion of cooling air 128 may flow during operation. To prevent excessive leakage of cooling air 128 from first cavity 132, a seal 134, such as a labyrinth seal may be mounted on seal plate 126.

As mentioned briefly above, seal plate 126 is mounted between TOBI 124 and turbine disk 146. In an embodiment, seal plate 126 is spaced apart from turbine disk 146 to form a second cavity 136 therebetween. Seal plate 126 may have an inner section 138 and an outer section 140. Inner section 138 may include one or more openings 142 that may be substantially radially aligned with holes 130 of TOBI 124 to receive a portion of cooling air 128. In an embodiment, openings 142 may be angled from the radial direction and also angled relative to the direction of rotation such that flow entry and turning loss is reduced. Outer section 140 may be configured to retain blades 148 in disk 146.

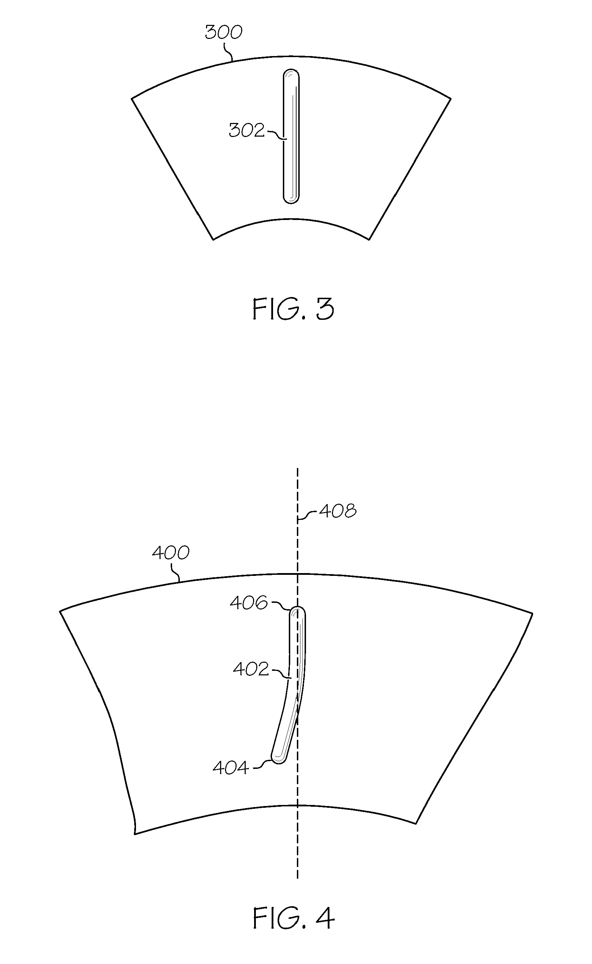

To increase air pressure of cooling air 128, seal plate 126 may include one or more pumping vanes 144, in an embodiment. Pumping vanes 144 may extend between inner and outer sections 138, 140 and axially from seal plate 126 toward turbine disk 146. In an embodiment, pumping vanes 144 extend radially outwardly from inner section 138 to outer section 140. FIG. 3 is a portion of a seal plate 300 including a pumping vane 302. In this example, pumping vane 302 may be straight radial vanes. Additionally, although vane 302 is shown as having a uniform thickness along its radial length, other embodiments of vane 302 may not have a uniform thickness. In another example, pumping vanes 302 may have alternative configurations suitable for directing air along side 150 of disk 146 (FIG. 2). In an embodiment, pumping vanes may be specifically contoured to provide additional pumping effectiveness. For example, a pumping vane may have a contour corresponding with an incidence of incoming cooling air flow at its inlet. One embodiment is shown in FIG. 4, where a portion of a seal plate 400 is depicted with a pumping vane 402. Here, pumping vane 402 has a radially inward portion 404 and a radially outward portion 406. Radially inward portion 404 is angled in a first direction relative to a radially extending axis 408, while radially outward portion 406 may be angled in a second direction. The second direction may be opposite of the first direction. Radially inward portion 404 may form an angle with radially extending axis 408 that is between about 0° and 40° to match the incidence of incoming cooling air 128 (FIG. 2). Radially outward portion 406 may form an angle with radially extending axis 408 that is between about 0° and 20°. Returning to FIG. 2, although a single pumping vane 144 is shown, more may alternatively be included. For example, in an embodiment, six vanes 144 may be included on seal plate 126, and pumping vanes 144 may be substantially equally spaced circumferentially therearound. In other embodiments, more or fewer pumping vanes 144 that are longer or shorter may be included and/or may be disposed in other configurations that may be suitable for increasing pressure of cooling air 128 that may flow from cavity 136 to blade 148.

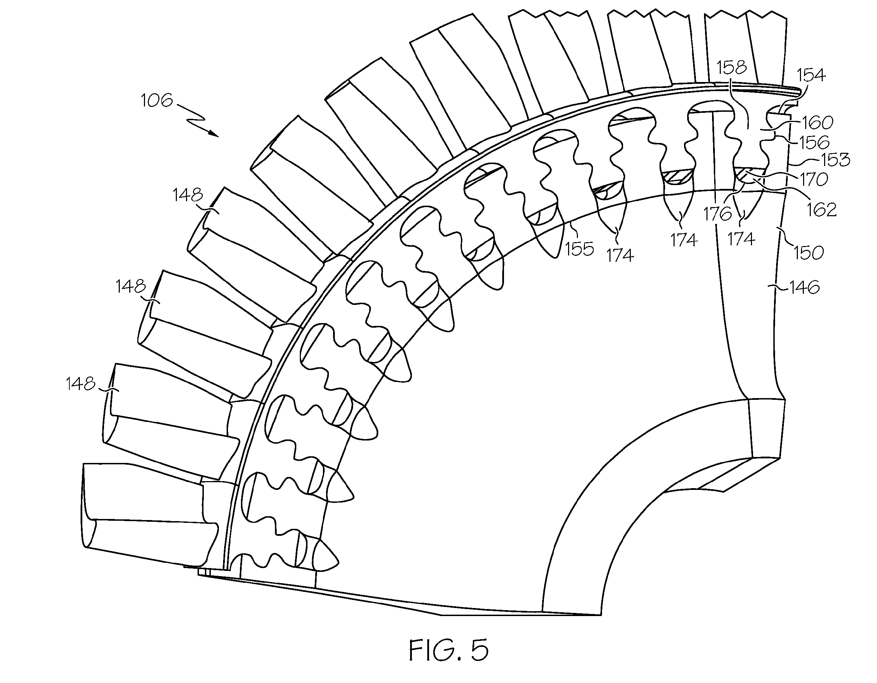

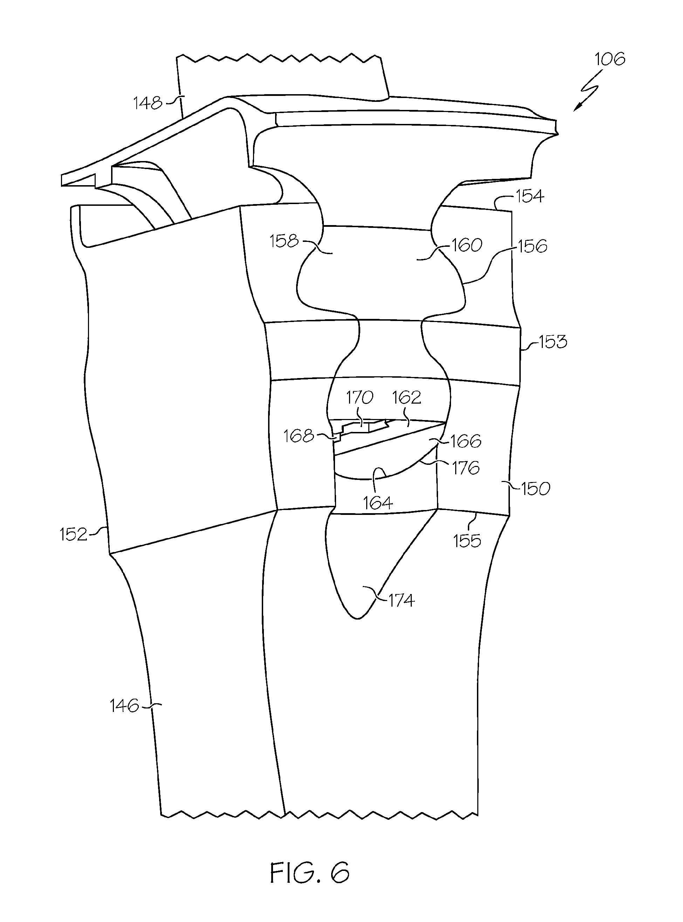

Turbine stage 106 is cooled by cooling air 128 from second cavity 136. FIG. 5 is a perspective view of a section of turbine disk 146 and blades 148 of turbine stage 106, and FIG. 6 is a close up view of a portion of turbine stage 106 shown in FIG. 5, according to an embodiment. With reference to FIGs. 2, 5, and 6, turbine stage 106 includes a turbine disk 146 and a plurality of blades 148.

Disk 146 has a first side 150, a second side 152, and an outer radial section 153. Outer radial section 153 includes a rim 154 and an overhang 155, and a plurality of disk slots 156 that are formed such that each extends radially inwardly from rim 154. Each blade 148 includes a blade attachment portion 158 that is disposed in a corresponding disk slot 156. Blade attachment portion 158 has a wall 160 that is disposed substantially flush with an adjacent portion of first side 150 of disk 146. Blade attachment portion 158 has a surface 162 that is spaced apart from an inner, substantially semi-circular wall of a disk slot bottom 164 to define a cooling air passage 166 therewith. Cooling air passage 166 extends axially from first side 150 to second side 152. Cooling air 128 flows into blade 148 through one or more passages 168 (partly shown) and 170 formed in blade attachment portion 158.

To maintain the pressure of cooling air 128 that enters cooling air passage 166 at a desired level, disk 146 may include a plurality of cooling air slots 174 formed in first side 150. Any number of cooling air slots 174 may be included, such as a number corresponding with the number of cooling air passages 166. Each cooling air slot 174 is configured to cooperate with its corresponding cooling air passage 166 to minimize a flow turning angle of cooling air 128. In an embodiment, cooling air slots 174 are configured such that when cooling air 128 flows from second cavity 136, air 128 exits pumping vanes 144 and turns once about 90° into cooling air passage 166 via cooling air slot 174 to thereby substantially reduce pressure losses as compared with configurations without cooling air slot 174. In those configurations, the flow of cooling air 128 would turn additionally about 45 degrees at overhang 155 as well as 90 degrees into cooling air passage 166 due to the absence of cooling air slot 174.

Cooling air slots 174 may extend radially outward in a first direction and turn into the cooling air passage 166 in a second direction that is about 90° relative to the first direction. In an embodiment, cooling air slots 174 extend radially outwardly from a point below overhang 155 to cooling air passage 166. In another embodiment, cooling air slots 174 may be substantially radially aligned with blade attachment portion 158 or may be angled such that a lower portion of cooling air slot 174 leads or trails blade attachment portion 158 in a rotational plane of disk 146. At least one cooling air slot 174 may be configured to have a decreasing cross-sectional flow area along its radial length. To further enhance cooling, a rounded corner 176 may be formed between disk slot bottom 164 and a corresponding cooling air slot 174. In an embodiment, cooling air slots 174 may be formed to originate at a point at which a vane 144 (FIG. 2) would terminate, when turbine assembly 106 is assembled. In an embodiment in which pumping vane 144 would terminate below, at or above overhang 155 and would follow the contour of side 150 of disk 146, pumping vanes 144 may or may not be included in turbine stage 106.

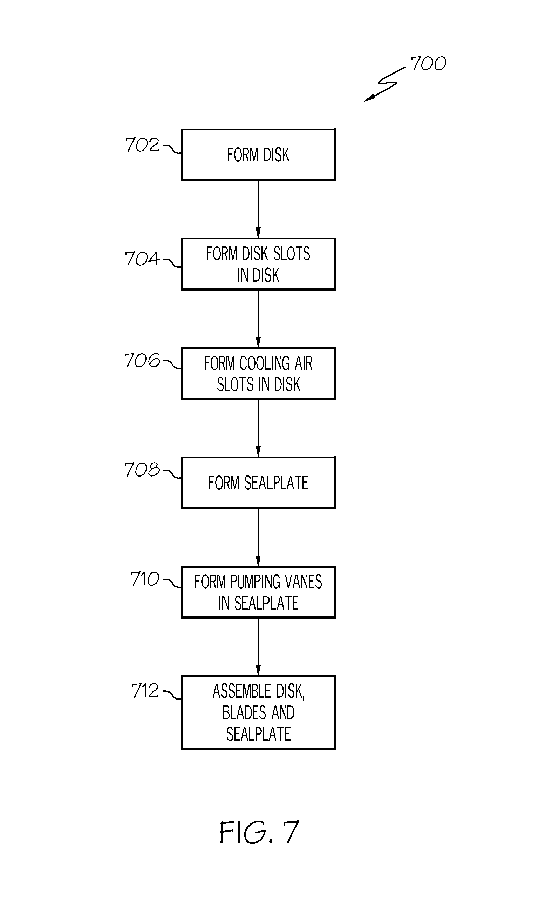

Turbine stage 106 may be manufactured using method 700, shown in FIG. 7. A disk is formed, step 702. The disk may include a rim and an overhang. Disk slots are then formed into the disk, step 704. Each disk slot extends radially inwardly from the rim of the disk toward the overhang. A plurality of cooling air slots is formed in the side of the disk that provides cooling air, step 706. In an embodiment, the cooling air slots are formed using a ball cutter, each cooling air slot corresponding with a cooling air passage and extending and located radially inwardly therefrom. For example, the cooling air slots may extend radially inwardly from the cooling air passage to a point below the overhang. In another example, the cooling air slots may be angled relative to the circumferential rotation of the disk. A seal plate may be formed, step 708. In an embodiment, the seal plate may include pumping vanes, and the pumping vanes may be formed in the seal plate, step 710. In another embodiment, contouring is formed into the pumping vanes. The disk, seal plate, and blades are then assembled, step 712. In an embodiment, blades are inserted into the disk slots and the seal plate is disposed adjacent to the disk, thereby forming a cooling air passage with about 45 degrees less flow turning than conventional designs.

The following example is presented in order to provide a more complete understanding of the inventive subject matter. The specific techniques, conditions, materials and reported data set forth as illustrations are exemplary and should not be construed as limiting the scope of the inventive subject matter.

In an example, two systems were compared, where a first system included a seal plate with pumping vanes extending therefrom attached to a disk having a plurality of cooling air passages and where a second system included a sealing plate with pumping vanes extending therefrom attached to a disk having a plurality of disk slots and a plurality of cooling air passages formed therein, similar to those described above. A computational fluid dynamic (CFD) analysis was performed to determine coefficients of flow through both systems. The coefficients were obtained by calculating air flow from the inlet at TOBI 124 to outlets in the cooling air passages. Within each system a number of flow coefficients and loss factors were computed for each flow restriction. The first system had a cooling air passage flow coefficient of 0.45, while the second system had a coefficient of 0.62. Accordingly, a higher through-flow margin was determined for the second system. It was theorized that the increased flow coefficient was the result of higher swirl due the cooling air slot, a pumping effect over the length of the slot and an overall reduction in turning angle between the pumping vane exit and the cooling air passage.

Hence, a system for cooling blades has been provided that may increase cooling, as compared with conventional systems. In addition, the system may be simple to implement into existing turbine engines.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. A turbine engine component for use with a plurality of blades (148), each blade (148) having an attachment portion (158) defined by a wall (160) and a surface (162), the turbine engine component comprising:
a disk (146) having a first side (150), a second side (152), and an outer radial section (153), the outer radial section (153) including a rim (154) and an overhang (155);
a plurality of disk slots (156) extending radially inwardly from the rim (154) of the disk (146), each disk slot (156) configured to receive the attachment portion (158) of a corresponding blade of the plurality of blades (148) such that when the blade (148) is disposed therein, the wall (160) of the blade attachment portion (158) is substantially flush with an adjacent portion of the first side (150) of the disk (146) and each disk slot (156) defines a cooling air passage (166) with the surface of the blade attachment portion (158), the cooling air passage (166) extending axially from the disk (146) first side (150) to the disk (146) second side (152); and
a cooling air slot (174) formed in the disk (146) first side (150) extending radially outward from the overhang (155) of the disk (146) to the cooling air passage (166).

2. The turbine engine component of claim 1, wherein the cooling air slot (174) is configured to allow at least a portion of the air to flow radially outward in a first direction and into the cooling air passage (166) in a second direction that is about 90° relative to the first direction.

3. The turbine engine component of claim 1, wherein the cooling air slot (174) has a radial length and a decreasing cross-sectional flow area along the radial length.

4. The turbine engine component of claim 1, further comprising a rounded corner (176) between the cooling air passage (166) and a corresponding cooling air slot (174).

5. The turbine engine component of claim 1, wherein the cooling air passage (166) includes an inlet formed on the disk first side (150) and the cooling air slot (174) extends radially outwardly from the overhang (155) to the inlet.

6. The turbine engine component of claim 1, wherein the cooling air passage (166) includes an inlet formed on the disk first side (150) and the cooling air slot (174) extends radially outwardly from the overhang (155) to a location in the cooling air passage (166) that is axially downstream from the inlet.
